# EUROPEAN PATENT SPECIFICATION

(11) **EP 4 614 637 B1**
(45) Date of publication and mention of the grant of the patent: **11.11.2026**
(21) Application number: 24807595.4
(22) Date of filing: 17.05.2024
(51) Int. Cl.: H01M 10/04, C09J 5/06, C09J 7/35, C09J 123/08

(54) **ELECTRODE ASSEMBLY WRAPPING DEVICE, WRAPPING METHOD, AND ELECTRODE ASSEMBLY MANUFACTURED ACCORDING TO THE SAME**
ELEKTRODENANORDNUNGUMHÜLLUNGSVORRICHTUNG, UMHÜLLUNGSVERFAHREN, UND DAMIT HERGESTELLTE ELEKTRODENANORDNUNG
APPAREIL D'EMBALLAGE D'ENSEMBLE ÉLECTRODE, PROCÉDÉ D'EMBALLAGE, ET ENSEMBLE ÉLECTRODE AINSI FABRIQUÉ

(30) Priority: 17.05.2023 KR 20230063887; 14.05.2024 KR 20240063046
(43) Date of publication of application: 10.09.2025
(73) Proprietor: LG Energy Solution Ltd., Seoul 07335 (KR)
(72) Inventor: JUNG, Jae Bong, Daejeon 34122 (KR); WOO, Min Ki, Daejeon 34122 (KR); AHN, Chang Bum, Daejeon 34122 (KR); CHOI, Byung Man, Daejeon 34122 (KR); SEO, Jun Yeong, Daejeon 34122 (KR); CHA, Ji Hoon, Daejeon 34122 (KR)
(74) Representative: Plasseraud IP
(86) International application number: PCT/KR2024/006710
(87) International publication number: WO 2024/237724

(56) References cited:
- EP-A1- 4 535 473
- JP-A- 2019 008 972
- KR-A- 20130 042 105
- KR-A- 20160 131 706
- KR-A- 20180 059 637
- KR-A- 20210 145 534
- KR-B1- 101 287 412
- US-A1- 2013 224 593

## Description

### Cross-Reference to Related Applications

The present application is a national stage entry of International Application No. PCT/KR2024/006710 filed on May 17, 2024, which claims priority to Korean Patent Application No. 10-2023-0063887 filed on May 17, 2023, and Korean Patent Application No. 10-2024-0063046 filed on May 14, 2024.

### Technical Field

The present disclosure relates to an electrode assembly wrapping device and wrapping method for wrapping a film on the surface of an electrode assembly having a plurality of battery cells stacked to fix the battery cells so that they do not separate or become misaligned, and to an electrode assembly manufactured according to the same.

### Background

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Electrode assemblies can be generally classified into the Jellyroll type, which is wound with a separator interposed between positive and negative electrodes of a sheet type with an active material applied, the Stack type, in which several positive and negative electrodes are sequentially stacked with a separator interposed, and the Stack & Folding type, in which the unit cells of the stack type are wound in a long length of separation film.

A Stack type electrode assembly is formed by stacking a plurality of battery cells (bicells or monocells with a separator interposed between positive and negative electrodes) to complete an electrode assembly, and each battery cell should be fixed to maintain a precise alignment. For this, a taping process was performed in which several rows of adhesive tape were wrapped around the surface of the electrode assembly.

However, the taping process of wrapping an adhesive tape around the perimeter of the electrode assembly, while effective in terms of binding a plurality of stacked battery cells into one, was not sufficient to suppress the bending phenomenon of the electrode assembly impregnated with electrolyte or to suppress the swelling phenomenon in use.

KR 101 287 412 B1 discloses an apparatus for wrapping electrode assembly. KR 2013 0042105 A discloses an wrapping method of jelly roll for battery cell of secondary battery. EP 4 535 473 A1, which belongs to the state of the art under Article 54(3) EPC), discloses an electrode assembly, and method for manufacturing electrode assembly.

### Summary

### Technical Problem

An object of the present disclosure is to provide an electrode assembly wrapping device and a wrapping method, which can suppress a bending phenomenon of an electrode assembly impregnated with an electrolyte or suppress a swelling phenomenon in use by fixing each battery cell of an electrode assembly stacked with a plurality of battery cells firmly to each other.

In addition, the present disclosure has another object to provide an electrode assembly wrapping device and a wrapping method, which can solve the problem of wrinkles occurring on the surface of a film or damage to a battery cell during a wrapping process for securing a cell of an electrode assembly in a fixed state.

However, the technical problem to be solved by the present disclosure is not limited to the above-described problem, and other problems not mentioned can be clearly understood by a person skilled in the art from the description of the disclosure described below.

### Technical Solution

The present disclosure relates to an electrode assembly wrapping device as set out in claim 1**.**

In one aspect of the present disclosure, the side sealing block may form a suction hole on the sealing surface.

In addition, the plurality of sealing bars provided in the lower stage and upper stage may have an adjustable spacing between the sealing bars.

Further, on the outer side of the pair of side sealing blocks based on the lower stage, a film stage and/or a cell stage may be provided.

The film stage and the cell stage may comprise a film magazine and a cell magazine in which a plurality of films and electrode assemblies are stacked and accommodated, respectively.

In addition, the upper stage may be mounted on an XY stage disposed along an XY plane parallel to a sealing surface of the lower stage, thereby enabling relative movement of the upper stage in three dimensions with respect to the lower stage.

Further, the upper stage may comprise a carrier that grips a film and an electrode assembly stacked and accommodated in the film magazine and the cell magazine, respectively, and moves onto the lower stage.

The present disclosure relates to a wrapping method of an electrode assembly as set out in claim 8.

The pair of side sealing blocks disposed on both sides of the lower stage to be movable forward and backward with respect to the lower stage and move toward the lower stage to attach the first and second films to the sides of the electrode assembly.

In addition, the pair of side sealing blocks, during the attachment of the first film and the second film to the sides of the electrode assembly, can apply negative pressure to adhere to the sealing surface, thereby preventing wrinkles.

Further, the spacing between the plurality of sealing bars provided in the lower stage and upper stage may be adjustable to correspond to a width of the electrode assembly.

According to an aspect of the present disclosure, the electrode assembly and the first film and the second film grip the film and the electrode assembly stacked and accommodated in the film magazine and the cell magazine, respectively, one by one by a carrier, and can move onto the lower stage.

Moreover, the first film and the second film may include an adhesive layer activated by heating, and heating may be applied to the first film and the second film after the completion of wrapping of the bottom surface, the upper surface, and the sides of the electrode assembly so that the first film and the second film are adhered to the electrode assembly.

In one aspect, the adhesive layer is an Ethylene-Vinyl Acetate (EVA) layer, wherein the EVA layer can activate adhesion in a temperature range of 140±20°C.

According to a wrapping method of the present disclosure, comprising a series of steps as described above, provided an electrode assembly including an electrode assembly having a plurality of battery cells stacked, a first film attached to a bottom surface and both sides of the electrode assembly, and a second film attached to an upper surface and both sides of the electrode assembly.

Here, on both sides of the electrode assembly, the second film may be overlapped and attached above the first film.

For example, the first film and the second film may be a PolyEthyleneTerephthalate (PET) film.

In addition, an adhesive layer may be interposed between the first film and the second film and the electrode assembly.

For example, the adhesive layer may be an EVA layer, and the EVA layer may activate adhesion by heating.

Further, the first film and the second film may wrap around the bottom surface and the upper surface, and both sides of the electrode assembly such that they are not exposed.

In addition, the first film and the second film may exert a compressive force across the bottom surface and the upper surface, and both sides of the electrode assembly.

### Advantageous Effects

According to the electrode assembly wrapping device and wrapping method of the present disclosure having the same configuration as described above, it enables a film to be precisely attached to a surface of an electrode assembly by lower and upper stages each having a plurality of sealing bars, and a pair of side sealing blocks.

In addition, it can attach the film while adsorbing the side of the film by negative pressure through a suction hole provided in the side sealing blocks, thereby effectively preventing wrinkles from occurring on the surface of the film attached to a small area.

Further, the electrode assembly manufactured by the electrode assembly wrapping device and wrapping method of the present disclosure can exhibit strong resistance to the bending phenomenon or the swelling phenomenon of the electrode assembly, as each stacked battery cell is firmly fixed to each other with the wrapped film.

However, the technical effects that can be obtained through the present disclosure is not limited to the above-described effects, and other effects not mentioned can be clearly understood by a person skilled in the art from the description of the disclosure described below.

### Brief Description of the Drawings

Because the following drawings attached to the present disclosure illustrate exemplary aspects of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating an exterior view of a wrapping device according to one aspect of the present disclosure.
FIG. 2 is a perspective view illustrating the main configuration of a wrapping device.
FIG. 3 is a perspective view of a wrapping device from another direction.
FIG. 4 is a front view of a wrapping device.
FIG. 5 to FIG. 10 are drawings illustrating a series of steps for attaching a film to the surface of an electrode assembly using a wrapping device of aspects of the present disclosure.
FIG. 11 is a drawing illustrating an example of an electrode assembly completed by a wrapping method of the present disclosure.
FIG. 12 is a drawing illustrating another example of an electrode assembly completed by a wrapping method of the present disclosure.

### Detailed Description

The present disclosure may have various modifications and various aspects, and thus specific aspects thereof will be described in detail below.

The terms "comprise," "include," and "have" used herein designate the presence of characteristics, numbers, steps, actions, components, or members described in the disclosure or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to an electrode assembly wrapping device as set out in claim 1.

In one aspect of the present disclosure, the side sealing blocks may be formed a suction hole on the sealing surface.

By using an electrode assembly wrapping device having the configuration as described above, it enables a film to be precisely attached to an electrode assembly surface by lower and upper stages each having a plurality of sealing bars, and a pair of side sealing blocks.

In addition, it can attach the film while adsorbing the side of the film by negative pressure through a suction hole provided in the side sealing blocks, thereby effectively preventing wrinkles from occurring on the surface of the film attached to a small area.

Hereinafter, specific aspects of the present disclosure will be described in detail with reference to the accompanying drawings.

### First Aspect

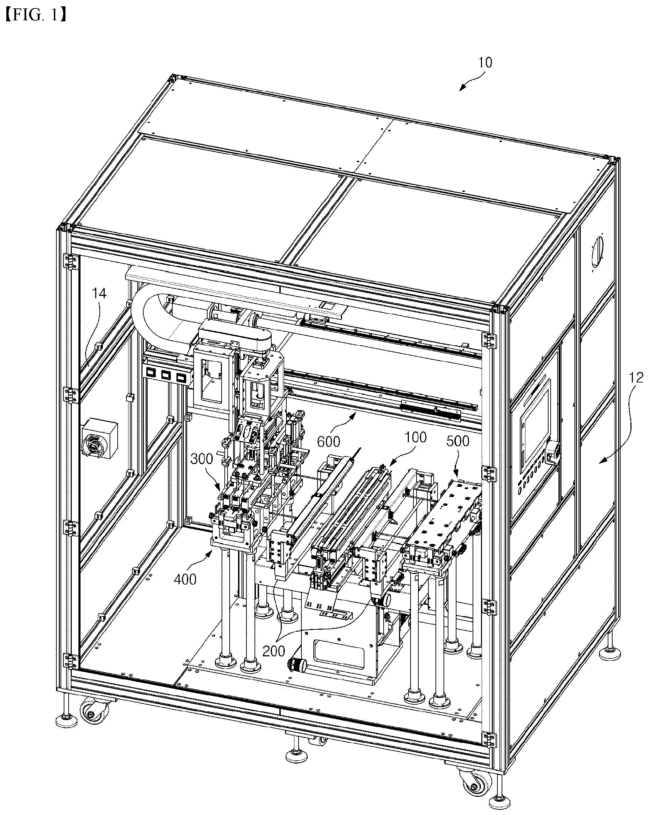

FIG. 1 is a drawing illustrating an exterior view of an electrode assembly wrapping device 10 (hereinafter, briefly "wrapping device") according to one aspect of the present disclosure. In the wrapping device 10 of FIG. 1, as one example, major devices, parts, and the like are installed in the space inside the cabinet 12, and the major components inside are protected from various foreign substances such as dust by the closed structure of the cabinet 12. The main components are fixed and supported in the frame 14 installed longitudinally inside the cabinet 12, and the electrode assembly 520 and the film 420 can be replenished, inspected, repaired, and the like through the doors provided at various places.

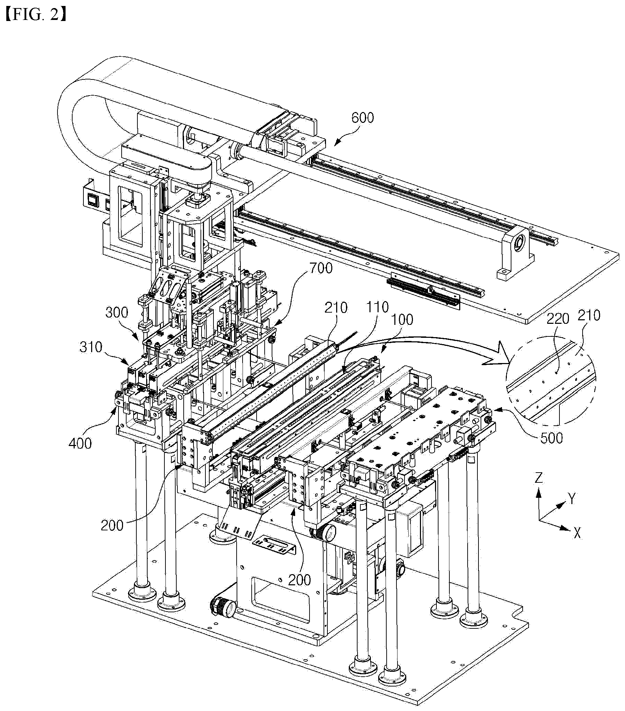

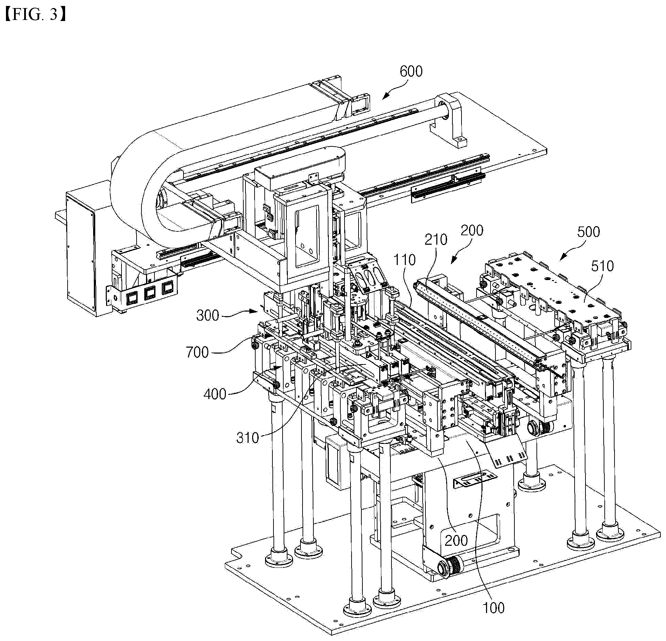

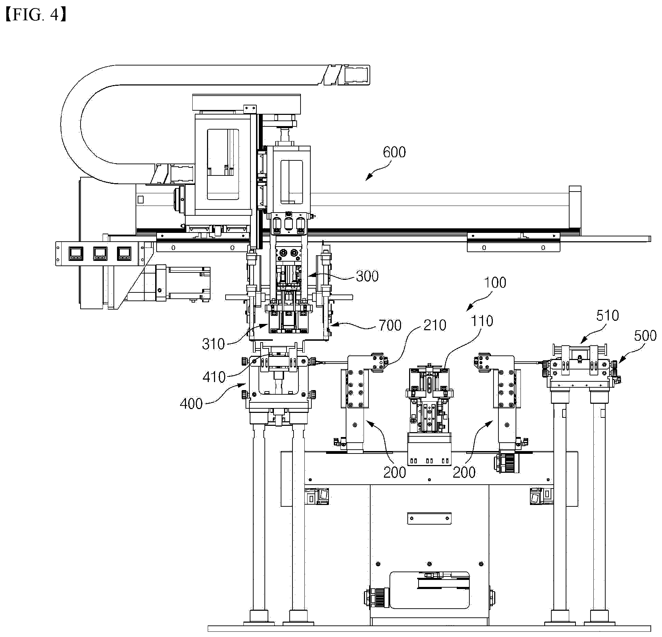

FIG. 2 and FIG. 3 are perspective views illustrating the main configuration of a wrapping device 10 installed in a cabinet 12, and FIG. 4 is a front view of the wrapping device. The illustrated wrapping device 10 largely comprises a lower stage 100, a pair of side sealing blocks 200, and an upper stage 300.

The lower stage 100 has a plurality of sealing bars 110 on the upper surface and can be movable up and down along the Z-axis direction (height direction) in the figure. The sealing bars 110 are components that generate and supply the heat necessary to attach the film 420 to the surface of the electrode assembly 520.

Side sealing blocks 200, which are provided in pairs, are disposed on both sides of the lower stage 100. The side sealing blocks 200 are sealing devices for attaching the film 420 to both sides of the electrode assembly 520, and the heating temperature of the sealing surface 210 corresponds to the heating temperature of the sealing bar 110 of the lower stage 100. In addition, each of the pair of side sealing blocks 200 is movable forward and backward with respect to the lower stage 100. The forward-and-backward movement of the side sealing blocks 200 is performed in conjunction with the up-and-down movement of the lower stage 100 and the upper stage 300, which will be described later, and the film 420 is attached to the top and bottom surfaces and both sides of the electrode assembly 520 by such a connected forward-and-backward movement and up-and-down movement.

The upper stage 300 is disposed on the upward of the lower stage 100, and the bottom surface of the upper stage 300 is provided with a sealing bar 310, corresponding to the sealing bar 110 of the lower stage 100. The sealing bar of the upper stage 300 is also heated to a temperature corresponding to the heating temperature of the sealing bar 110 of the lower stage 100. The upper stage 300 is movable up and down with respect to the lower stage 100, and during the wrapping process, the lower and upper stages 100, 300 fix the electrode assembly 520 located therebetween and apply an appropriate sealing pressure.

The up-and-down movement of the lower and upper stages 100, 300 may be accomplished by a conventional cylinder device. The cylinder device may be electric, hydraulic, pneumatic, or the like, and in aspects of the present disclosure, the up-and-down movement of the lower and upper stages 100, 300 may be pneumatically operated, as the suction hole 220 of the side sealing block 200, which will be described below, uses air pressure. The sealing pressure of the pneumatically operated lower and upper stages 100, 300 will correspond to the air pressure, and the sealing pressure may be approximately in the range of 3±0.2 bar. For the same reason, the pair of side sealing blocks 200 may also be movable forward and backward pneumatically.

Referring to a partial enlarged view of the side sealing block 200 in FIG. 2, a plurality of suction holes 220 are formed on the sealing surface 210 of the side sealing block 200. During a wrapping operation of the wrapping device 10, the side sealing block 200 enters the lower stage 100 and attaches the film 420 to a narrow side of the electrode assembly 520. By attaching the end of the film 420 to a narrow area, it is easy to cause wrinkles in the film 420 during the attachment process. Since wrinkles in the film 420 that occur during the wrapping process are a defect factor, it is necessary to prevent them, and for this, the present disclosure provides a plurality of suction holes 220 on the sealing surface 210 of the side sealing block 200. In other words, the side sealing block 200 adsorbs the film 420 with the negative pressure generated by the suction holes 220 and keeps the film 420 in a taut state while the attachment proceeds, so that wrinkles do not occur even when the tip of the film 420 is attached to the side of the electrode assembly 520.

In addition, referring to FIGS. 2 to 4, the sealing bars 110, 310 provided on the lower and upper stages 100, 300, respectively, are exemplarily three in number. According to an aspect of the present disclosure, wherein the sealing bars 110, 310 are provided in plurality, the spacing between the sealing bars 110, 310 may be configured to be adjustable. For example, in three sealing bars 110, 310, the area occupied by the overall sealing bars 110, 310 may be varied by linearly moving the sealing bars on both sides around the sealing bar in the center. The area formed by the plurality of sealing bars 110, 310 corresponds to the width of the electrode assembly 520. In other words, by adjusting the spacing between the plurality of sealing bars 110, 310, it enables wrapping for electrode assemblies 520 of various specifications with different width sizes. Of course, in correspondence to the adjustment of the spacing between the sealing bars 110, 310, the distance by which the pair of side sealing blocks 200 move forward and backward is also adjusted.

Meanwhile, based on the lower stage 100, the outer side of the pair of side sealing blocks 200 may be equipped with a film stage 400 and/or a cell stage 500 to effectively perform a wrapping process that proceeds sequentially for the plurality of electrode assemblies 520. The film stage 400 and the cell stage 500 each comprise a film magazine 410 and a cell magazine 510, respectively, in which a plurality of films 420 and electrode assemblies 520 are stacked and accommodated.

Further, the upper stage 300 may be mounted on an XY stage 600 disposed along an XY plane parallel to the sealing surface 210 of the lower stage 100, such that the upper stage 300 is configured to enable relative movement in three dimensions with respect to the lower stage 100. The XY stage 600 is fixedly mounted on a frame 14 installed within the cabinet 12, and the upper stage 300 suspended on the XY stage 600 can be moved to any position along the XY plane. Also, as described above, the upper stage 300 is movable up and down with respect to the lower stage 100, and consequently, the upper stage 300 can be moved three-dimensionally in XYZ space with respect to the lower stage 100.

The upper stage 300, which is capable of such three-dimensional movement, may be provided with a carrier 700 corresponding to the installation of the film stage 400 and/or the cell stage 500. The carrier 700 serves to grip and move the film 420 and electrode assembly 520, one by one, stacked and accommodated in the film magazine 410 and cell magazine 510, respectively, onto the lower stage 100. By the configuration of the carrier 700, the film stage 400, and/or the cell stage 500, the wrapping operation for a plurality of electrode assemblies 520 can be automated and performed efficiently.

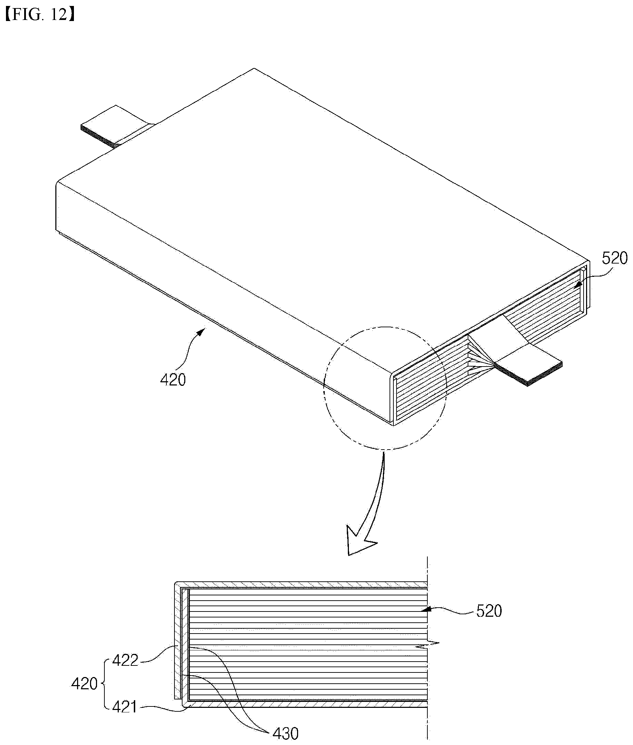

In addition, the sealing bar 110 of the lower stage 100 and the sealing bar 310 of the upper stage 300, and the sealing surface 210 of the side sealing block 200 may have a heating member embedded therein, such as a heating member such as an electric heating wire. The heating members embedded in each of the sealing bars 110, 310 of the lower and upper stages 100, 300 and the sealing surface 210 of the side sealing block 200 may be provided for the purpose of activating adhesion of the adhesive layer 430 (refer to FIG. 12) provided on the surface of the film 420.

When wrapping the upper surface, the bottom surface, and both sides of the electrode assembly 520 with the film 420, if the adhesive layer 430 on the surface of the film 420 has a stickiness, wrapping becomes difficult and the risk of occurrences of defects becomes very high. Therefore, it may be desirable to form the adhesive layer 430 on the attachment surface of the film 420 with a material that remains smooth and not sticky at room temperature, but that activates the adhesive function only when heated to a certain temperature. This will be described in detail in the following second aspect.

### Second Aspect

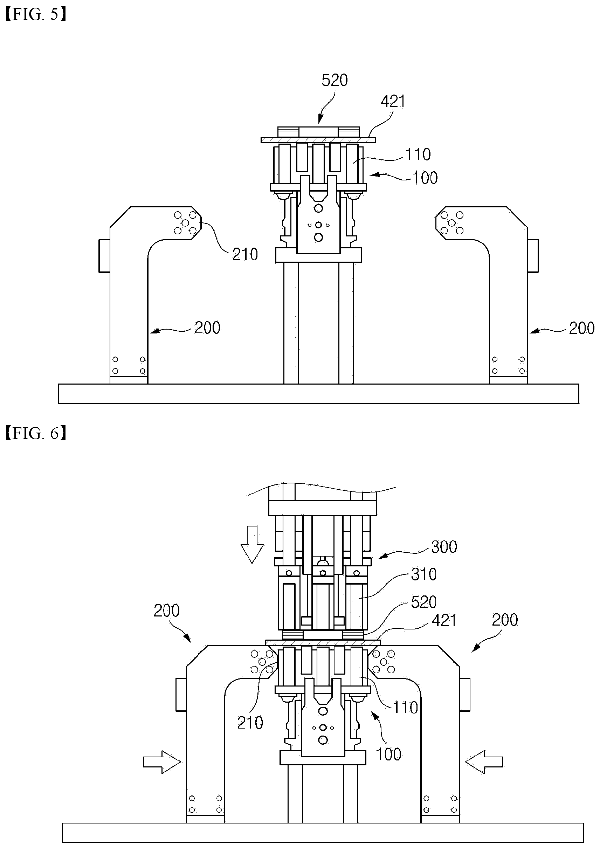

Referring to FIGS. 1 to 4, a configuration of the wrapping device 10 has been described in detail in a first aspect, followed by a description of a method of wrapping an electrode assembly (hereinafter, briefly referred to as the "wrapping method") in which the film 420 is attached to the surface of the electrode assembly 520 using the above-described wrapping device 10 in a second aspect. FIGS. 5 to 10 are drawings illustrating a series of steps for attaching a film 420 to the surface of an electrode assembly 520 using a wrapping device 10 of the present disclosure. From the accompanying drawings and description, a wrapping method of an electrode assembly 520 according to the present disclosure will be clearly understood.

FIG. 5 illustrates the steps of seating a first film 421 cut to size for an electrode assembly 520 above a plurality of sealing bars 110 provided on an upper surface of the lower stage 100, and a step of aligning and seating the electrode assembly 520 above the first film 421. In the step of FIG. 5, the lower stage 100 is raised to a position suitable for the first film 421 and the electrode assembly 520 to be seated, and the pair of side sealing blocks 200 move backward.

FIG. 6 illustrates a next step, in which the upper stage 300 moves down so that the plurality of sealing bars 310 provided on the bottom surface of the upper stage 300 contact the electrode assembly 520 placed above the sealing bars 110 of the lower stage 100. Therefore, in the step of FIG. 6, the sealing bar 310 of the upper stage 300, the electrode assembly 520, the first film 421, and the sealing bar 110 of the lower stage are positioned, from top to bottom, and the upper stage 300 and the lower stage 100 are pressurized and fixed to the electrode assembly 520 and the first film 421 at a pressure suitable for attaching the first film 421, such as a pressure in the range of 3±0.2 bar.

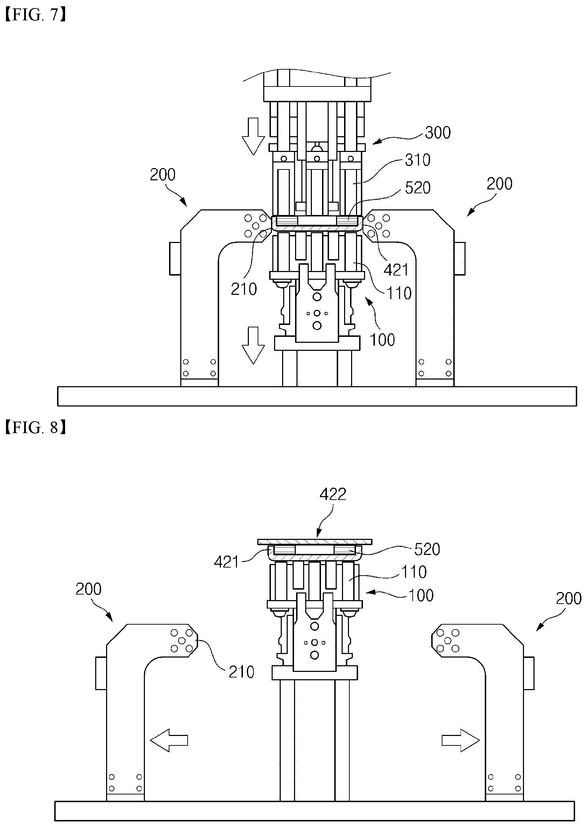

Moreover, referring to FIG. 6 and FIG. 7, when the lower and upper stages 100, 300 are adhered to the electrode assembly 520, at an appropriate time, the pair of side sealing blocks 200 move forward such that the sealing surfaces 210 thereof are in a position corresponding to the sides of the electrode assembly 520. In this case, the sealing surfaces 210 of the side sealing blocks 200 are positioned below the first film 421 and the electrode assembly 520. In this state, when the overall lower and upper stages 100, 300 move down, the first film 421 protruding from the sides of the sealing bars 110, 310 of the pair of side sealing blocks 200 is adhered to the sides of the electrode assembly 520, and the first film 421 is attached to the bottom surface and sides of the electrode assembly 520 by operating and heating the sealing bars 110 of the lower stage 100 and the side sealing blocks 200.

After attaching the first film 421, the process next proceeds to attach the second film 422. As shown in FIG. 8, in order to raise the second film 422 on the upper surface of the electrode assembly 520, the upper stage 300 moves up and deviates from the lower stage 100, and an identically cut second film 422 is aligned and seated on the exposed upper surface of the electrode assembly 520.

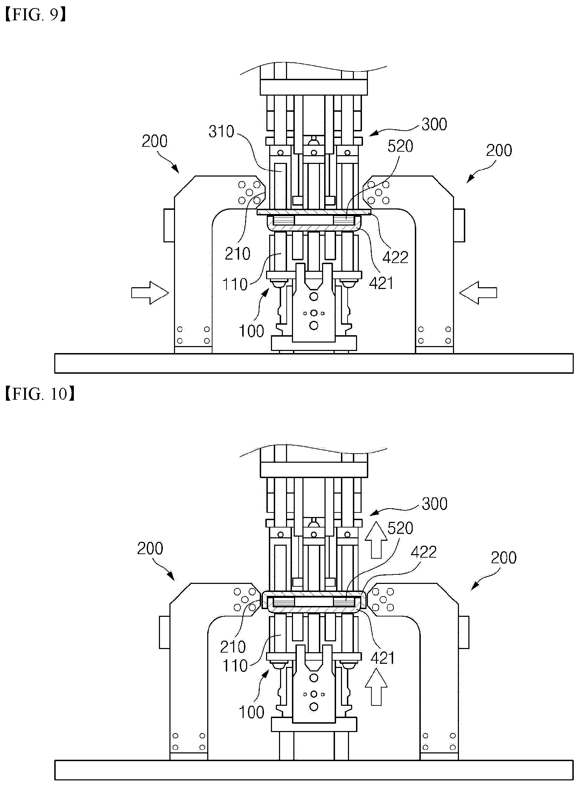

FIG. 9, similar to FIG. 6 described above, illustrates the upper stage 300 moves down so that a plurality of sealing bars 310 provided on the upper stage 300 contact the second film 422. Here, different from the case in FIG. 6 for attaching the first film 421, the second film 422 is positioned below the sealing surface 210 of the side sealing block 200. This is because the second film 422 is seated above the upper surface of the electrode assembly 520, and therefore, the force to attach the tip of the second film 422 to the side of the electrode assembly 520 should act opposite to the case of FIG. 6. Accordingly, the pair of side sealing blocks 200 should be moved forward after the overall lower and upper stages 100, 300 move down and the second film 422 is positioned below the sealing surface 210.

FIG. 10 shows the final process of attaching the second film 422, wherein the lower and upper stages 100, 300 are in close contact with the electrode assembly 520, while the entire electrode assembly 520 moves up from below the sealing surface 210 of the side sealing blocks 200, thereby causing the side sealing blocks 200 to adhere the second film 422 protruding from the side of the sealing bar 110, 310 to sides of the electrode assembly, in this state, the sealing bar 310 of the upper stage 300 and the side sealing blocks 200 are heated to attach the second film 422 to the upper surface and sides of the electrode assembly 520.

In a wrapping method that includes such a series of steps, various configurations of the wrapping device 10 described in the first aspect may be used. For example, the pair of side sealing blocks 200 may apply negative pressure during attachment of the first film 421 and the second film 422 to the sides of the electrode assembly 520 to adhere to the sealing surface 210 to prevent wrinkling. In addition, the spacing between the plurality of sealing bars 110, 310 provided on the lower and upper stages 100, 300 can be adjusted to correspond to the width of the electrode assembly 520, and the film 420 and the electrode assembly 520 stacked and accommodated in the film magazine 410 and the cell magazine 510, respectively, can be gripped one by one by the carrier 700 and moved onto the lower stage 100.

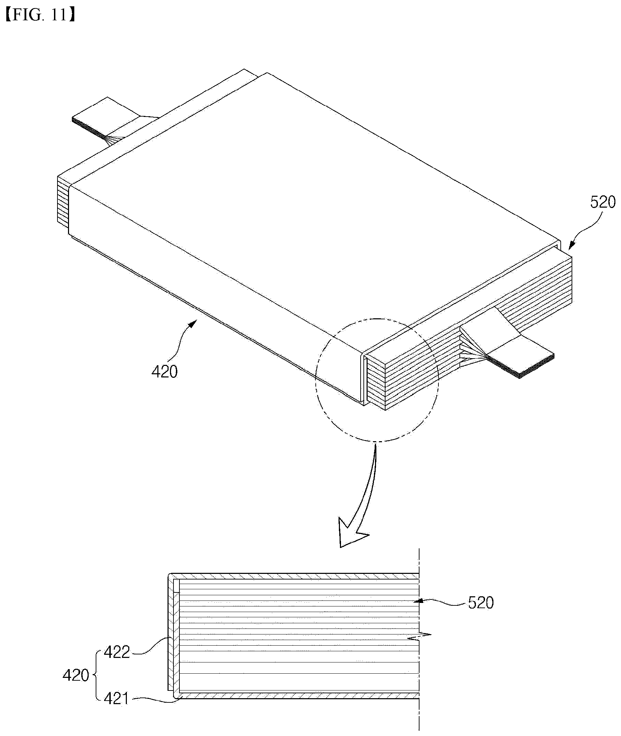

FIG. 11 is a drawing illustrating an example of an electrode assembly 520 that has been completed using the wrapping method of the present disclosure described with reference to FIGS. 5 to 10. The electrode assembly 520 illustrated refers to the electrode assembly 520 with the film 420 attached, in other words, the electrode assembly 520 after the wrapping process, and includes an electrode assembly 520 with a plurality of battery cells stacked on it, a first film 421 attached to the bottom surface and both sides of the electrode assembly 520, and a second film 422 attached to the upper surface and both sides of the electrode assembly 520. The first film 421 and the second film 422 may be films 420 made of a material having excellent various strengths (tensile strength, rupture strength, etc.) while being thin, such as a PolyEthyleneTerephthalate (PET) film.

Moreover, referring to both sides of the electrode assembly 520 shown in FIG. 11, a second film 422 covering the upper surface of the electrode assembly 520 is overlapped and attached above the first film 421. It will be easily understood that this overlapping structure of the films 421, 422 on both sides of the electrode assembly 520 results from the wrapping method described above.

Moreover, FIG. 12 is a drawing illustrating another example of an electrode assembly 520 that is completed using the wrapping method of the present disclosure. While the basic attachment structure of the electrode assembly 520 and the film 420 is the same, there are some differences in configuration. The characteristic configuration of the electrode assembly 520 of FIG. 12 is as described below.

The first film 421 and the second film 422 include an adhesive layer 430 that is activated by heating. The adhesive layer 430 is formed on a surface where the first film 421 and the second film 422 attach to the electrode assembly 520 (attachment surface). The adhesive layer 430 may be composed of a material that remains smooth and not sticky at room temperature but activates the adhesive function when heated to a certain temperature. For example, the adhesive layer may be an EVA (Ethylene-Vinyl Acetate) layer, and the adhesive action of the EVA layer may be activated in a temperature range of 140±20°C. By such properties of the adhesive layer 430, the film 420 can be attached flatly and smoothly to the surface of the electrode assembly 520, without wrinkles, bubbles, etc., as described above.

An adhesive layer 430, such as an EVA layer, etc. provided in the film 420, wherein the adhesive function is activated after the wrapping of the bottom surface, the upper surface, and the sides of the electrode assembly 520 is completed, may be desirable in terms of preventing defects such as wrinkle occurrence. Accordingly, in a wrapping method according to an aspect of the present disclosure, a heating member embedded in each of the sealing bars 110, 310 of the lower and upper stages 100, 300 and the sealing surface 210 of the side sealing block 200 can be operated as a step after applying a film 420 having an adhesive layer 430 activated by heating, provided that the first film 421 and the second film 422 wrap both the bottom surface and the upper surface and the sides of the electrode assembly 520. By activating the adhesive layer 430 by heating, the wrapping process of the film 420 on the electrode assembly 520 is completed more firmly.

Further, referring to FIG. 12, the first film 421 and the second film 422 may be attached to the electrode assembly 520 in a large area that does not expose the lower surface, the upper surface, and both sides of the electrode assembly 520. In other words, the first film 421 and the second film 422 may be attached across the overall, full-width direction of the electrode assembly 520. In practice, to account for any alignment errors between the first film 421 and the second film 422 and the electrode assembly 520 that may occur on the wrapping device 10, the first film 421 and the second film 422 may have a width that exceeds the full width of the electrode assembly 520, such as a width length corresponding to approximately 105% to 110% of the full width of the electrode assembly 520.

The first film 421 and the second film 422 may be closely adhered to the bottom surface and upper surface of the electrode assembly 520, and across both sides thereof, thereby exerting a uniform compressive force around the electrode assembly 520. This compressive force of the film 420 may be further reinforced with the assist of the adhesive layer 430. In a conventional taping process of wrapping the electrode assembly 520 with an adhesive tape, the adhesive tape exerts a localized fixing force on the electrode assembly 520, and the adhesion of the adhesive tape is insufficient and not uniform. compared to this, in the electrode assembly 520 manufactured by the wrapping device 10 and the wrapping method of aspects of the present disclosure, the fixing force of the film 420 exerts uniformly over a large area in the overall width direction, so that each stacked battery cell is firmly fixed to each other with the wrapped film, thereby the electrode assembly 520 exhibits strong resistance to the bending phenomenon, the swelling phenomenon, and the like.

In particular, the electrode assembly 520 manufactured by the wrapping device 10 and the wrapping method of aspects of the present disclosure can reliably fix the plurality of battery cells to each other by the film 420 which is attached across the overall width direction, and by the pair of side sealing blocks 200 which apply negative pressure while attaching the first film 421 and the second film 422 to the sides of the electrode assembly 520, without causing defects such as wrinkles or bubbles to occur in the film 420 during the wrapping process. Furthermore, the adhesion of the film 420 to the electrode assembly 520 can be stably maintained for a long period of time with the assist of the adhesive layer 430 activated by heating, thereby improving the stability of the electrode assembly 520.

As above, the present disclosure has been described in more detail through the drawings and aspects.

### Description of Reference Numerals

10: wrapping device
12: cabinet
14: frame
100: lower stage
110: sealing bar
200: side sealing block
210: sealing surface
220: suction hole
300: upper stage
310: sealing bar
400: film stage
410: film magazine
420: film
421: first film
422: second film
430: adhesive layer
500: cell stage
510: cell magazine
520: electrode assembly
600: XY stage
700: carrier

## Claims

1. An electrode assembly wrapping device (10), comprising:
a lower stage (100) having a plurality of sealing bars (110) on an upper surface of the lower stage (100), wherein the lower stage (100) is configured to move up and down;
a pair of side sealing blocks (200) disposed on opposite sides of the lower stage (100), the pair of side sealing blocks (200) configured to move toward the lower stage (100) and away from the lower stage (100); and
an upper stage (300) having a plurality of sealing bars (310) on a lower surface of the upper stage (300), wherein the upper stage (300) is disposed on top of the lower stage (100) and wherein the upper stage (300) is configured to move up and down with respect to the lower stage (100).

2. The electrode assembly wrapping device (10) of claim 1, wherein the side sealing block (200) comprises a suction hole (220) on a sealing surface (210) of the side sealing block (200).

3. The electrode assembly wrapping device (10) of claim 1, wherein the plurality of sealing bars (110) in the lower stage (100) have an adjustable spacing between the sealing bars (110) and the plurality of sealing bars (310) in the upper stage (300) have an adjustable spacing between the sealing bars (310).

4. The electrode assembly wrapping device (10) of claim 1, wherein a film stage (400) and a cell stage (500) is provided on an outer side of the pair of side sealing blocks (200) relative to the lower stage (100).

5. The electrode assembly wrapping device (10) of claim 4, wherein the film stage (400) comprises a film magazine (410) in which a plurality of films are stacked and accommodated and wherein the cell stage (500) comprises a cell magazine (510) in which a plurality of electrode assemblies are stacked and accommodated.

6. The electrode assembly wrapping device (10) of claim 5, wherein the upper stage (300) is mounted on an XY stage (600) disposed along an XY plane parallel to a sealing surface (210) of the lower stage (100), wherein the upper stage (300) is configured to move in three dimensions with respect to the lower stage (100).

7. The electrode assembly wrapping device (10) of claim 6, wherein the upper stage (300) comprises a carrier (700) configured to grip a film (420) accommodated in the film (420) magazine (410) and an electrode assembly (520) accommodated in the cell magazine (510), and wherein the carrier (700) is configured to move onto the lower stage (100).

8. A method of wrapping an electrode assembly (520), the method comprising:
seating a cut first film (421) above a plurality of sealing bars (110) on an upper surface of a lower stage (100);
aligning and seating an electrode assembly (520) above the first film (421); and
lowering an upper stage (300) so that a plurality of sealing bars (310) on a bottom surface of the upper stage (300) contact the electrode assembly (520);
lowering the lower stage (100) and the upper stage (300) while the lower stage (100) and the upper stage (300) are in close contact with the electrode assembly (520), so that a pair of side sealing blocks (200) protruding from sides of the sealing bars (110, 310) adhere the first film (421) to sides of the electrode assembly (520), wherein the sealing bars (110) of the lower stage (100) and the side sealing blocks (200) are operated to attach the first film (421) to a bottom surface and the sides of the electrode assembly (520);
aligning and seating a cut second film (422) on an upper surface of the electrode assembly (520) with the upper stage (300) deviated with respect to the lower stage (100);
lowering the upper stage (300) so that a plurality of sealing bars (310) in the upper stage (300) contact the second film (422); and
lowering the lower stage (100) and the upper stage (300) below the sealing blocks while the lower stage (100) and the upper stage (300) are in close contact with the electrode assembly (520), and subsequently raising the lower stage (100) and the upper stage (300) such that the side sealing blocks (200) adhere the second film (422) protruding from the sides of the sealing bars (110 (310) to the sides of the electrode assembly (520), wherein the sealing bars (310) of the upper stage (300) and the side sealing blocks (200) are operated to attach the second film (422) to the upper surface and sides of the electrode assembly (520).

9. The method of claim 8, wherein the pair of side sealing blocks (200) disposed on opposite sides of the lower stage (100) are configured to be movable forward and backward with respect to the lower stage (100) and to be movable toward the lower stage (100) to attach the first and second films (422) to the sides of the electrode assembly (520).

10. The method of claim 9, wherein the pair of side sealing blocks (200) are configured to apply negative pressure during the attachment of the first film (421) and the second film (422) to the sides of the electrode assembly (520), thereby preventing wrinkles in the first film (421) and the second film (422).

11. The method of claim 8, wherein the plurality of sealing bars (110) in the lower stage (100) are adjustably spaced apart to correspond to a width of the electrode assembly (520) and the plurality of sealing bars (310) in the upper stage (300) are adjustably spaced apart to correspond to the width of the electrode assembly (520).

12. The method of claim 8, wherein the electrode assembly (520) and the first film (421) and the second film (422) are stacked and accommodated in a film magazine (410) and a cell magazine (510), respectively, gripped one by one and moved onto the lower stage (100) by a carrier (700).

13. The method of claim 8, wherein the first film (421) comprises an adhesive layer (430) activated by heating and the second film (422) comprise an adhesive layer (430) activated by heating, and
heat is applied to the first film (421) and the second film (422) after wrapping the bottom surface, the upper surface, and the sides of the electrode assembly (520), such that the first film (421) and the second film (422) are adhered to the electrode assembly (520).

14. The method of claim 13, wherein the adhesive layer (430) is an Ethylene-Vinyl Acetate (EVA) layer,
wherein the EVA layer activates adhesion in a temperature range from 120°C to 160°C.

15. An electrode assembly (520), comprising:
a plurality of battery cells stacked therein;
a first film (421) attached to a bottom surface and opposite side surfaces of the plurality of battery cells; and
a second film (422) attached to an upper surface and the opposite side surfaces of the plurality of battery cells, wherein
the first film (421) and the second film (422) have a width that exceeds the full width of the electrode assembly (520) corresponding to approximately 105% to 110% of the full width of the electrode assembly (520).

16. The electrode assembly (520) of claim 15, wherein on the opposite side surfaces of the electrode assembly (520), the second film (422) is overlapped and attached over the first film (421).

17. The electrode assembly (520) of claim 15, wherein the first film (421) and the second film (422) are a PolyEthyleneTerephthalate (PET) film.

18. The electrode assembly (520) of claim 15, wherein an adhesive layer (430) is interposed between the first film (421) and the second film (422) and the electrode assembly (520).

19. The electrode assembly (520) of claim 18, wherein the adhesive layer (430) is an EVA layer, and
the EVA layer is configured to adhere when heated.

20. The electrode assembly (520) of claim 15, wherein
the first film (421) and the second film (422) wrap around the bottom surface and the upper surface, and the opposite side surfaces of the electrode assembly (520) such that they are not exposed.

21. The electrode assembly (520) of claim 15, wherein the first film (421) and the second film (422) exert a compressive force across the bottom surface and the upper surface, and the opposite side surfaces of the electrode assembly (520).

## Patentansprüche

1. Vorrichtung zum Umhüllen einer Elektrodenbaugruppe (10), umfassend:
• eine untere Plattform (100), die eine Vielzahl von Dichtungsleisten (110) auf einer oberen Fläche der unteren Plattform (100) aufweist, wobei die untere Plattform (100) konfiguriert ist, um sich nach oben und nach unten zu bewegen;
• ein Paar Seitendichtungsblöcke (200), die auf gegenüberliegenden Seiten der unteren Plattform (100) angeordnet sind, wobei das Paar Seitendichtungsblöcke (200) konfiguriert ist, um sich auf die untere Plattform (100) zu und von der unteren Plattform (100) weg zu bewegen; und
• eine obere Plattform (300), die eine Vielzahl von Dichtungsleisten (310) auf einer unteren Fläche der oberen Plattform (300) aufweist, wobei die obere Plattform (300) auf der Oberseite der unteren Plattform (100) angeordnet ist und wobei die obere Plattform (300) konfiguriert ist, um sich in Bezug auf die untere Plattform (100) nach oben und nach unten zu bewegen.

2. Vorrichtung zum Umhüllen einer Elektrodenbaugruppe (10) nach Anspruch 1, wobei der Seitendichtungsblock (200) eine Ansaugöffnung (220) auf einer Dichtungsfläche (210) des Seitendichtungsblocks (200) umfasst.

3. Vorrichtung zum Umhüllen einer Elektrodenbaugruppe (10) nach Anspruch 1, wobei die Vielzahl von Dichtungsleisten (110) in der unteren Plattform (100) einen einstellbaren Abstand zwischen den Dichtungsleisten (110) aufweisen und die Vielzahl von Dichtungsleisten (310) in der oberen Plattform (300) einen einstellbaren Abstand zwischen den Dichtungsleisten (310) aufweisen.

4. Vorrichtung zum Umhüllen einer Elektrodenbaugruppe (10) nach Anspruch 1, wobei eine Folienplattform (400) und eine Zellenplattform (500) auf einer äußeren Seite des Paars Seitendichtungsblöcke (200) relativ zur unteren Plattform (100) bereitgestellt sind.

5. Vorrichtung zum Umhüllen einer Elektrodenbaugruppe (10) nach Anspruch 4, wobei die Folienplattform (400) ein Folienmagazin (410) umfasst, in dem eine Vielzahl von Folien gestapelt und aufgenommen sind, und wobei die Zellenplattform (500) ein Zellenmagazin (510) umfasst, in dem eine Vielzahl von Elektrodenbaugruppen gestapelt und aufgenommen sind.

6. Vorrichtung zum Umhüllen einer Elektrodenbaugruppe (10) nach Anspruch 5, wobei die obere Plattform (300) auf einer XY-Plattform (600) montiert ist, die entlang einer XY-Ebene parallel zu einer Dichtungsfläche (210) der unteren Plattform (100) angeordnet ist, wobei die obere Plattform (300) konfiguriert ist, um sich in Bezug auf die untere Plattform (100) in drei Dimensionen zu bewegen.

7. Vorrichtung zum Umhüllen einer Elektrodenbaugruppe (10) nach Anspruch 6, wobei die obere Plattform (300) einen Träger (700) umfasst, der konfiguriert ist, um eine Folie (420), die im Magazin (410) der Folie (420) aufgenommen ist, und eine Elektrodenbaugruppe (520), die im Zellenmagazin (510) aufgenommen ist, zu greifen, und wobei der Träger (700) konfiguriert ist, um sich auf die untere Plattform (100) zu bewegen.

8. Verfahren zum Umhüllen einer Elektrodenbaugruppe (520), wobei das Verfahren umfasst:
• Aufsetzen einer geschnittenen ersten Folie (421) über einer Vielzahl von Dichtungsleisten (110) auf einer oberen Fläche einer unteren Plattform (100);
• Ausrichten und Aufsetzen einer Elektrodenbaugruppe (520) über der ersten Folie (421); und
• Absenken einer oberen Plattform (300), sodass eine Vielzahl von Dichtungsleisten (310) auf einer unteren Fläche der oberen Plattform (300) die Elektrodenbaugruppe (520) kontaktieren;
• Absenken der unteren Plattform (100) und der oberen Plattform (300), während die untere Plattform (100) und die obere Plattform (300) in engem Kontakt mit der Elektrodenbaugruppe (520) stehen, sodass ein Paar Seitendichtungsblöcke (200), die von Seiten der Dichtungsleisten (110, 310) vorstehen, die erste Folie (421) an Seiten der Elektrodenbaugruppe (520) anhaften lassen, wobei die Dichtungsleisten (110) der unteren Plattform (100) und die Seitendichtungsblöcke (200) betrieben werden, um die erste Folie (421) an einer unteren Fläche und den Seiten der Elektrodenbaugruppe (520) zu befestigen;
• Ausrichten und Aufsetzen einer geschnittenen zweiten Folie (422) auf einer oberen Fläche der Elektrodenbaugruppe (520), wobei die obere Plattform (300) in Bezug auf die untere Plattform (100) abweicht;
• Absenken der obere Plattform (300), sodass eine Vielzahl von Dichtungsleisten (310) in der oberen Plattform (300) die zweite Folie (422) kontaktieren; und
• Absenken der unteren Plattform (100) und der oberen Plattform (300) unter die Dichtungsblöcke, während die untere Plattform (100) und die obere Plattform (300) in engem Kontakt mit der Elektrodenbaugruppe (520) stehen, und anschließendes Anheben der unteren Plattform (100) und der oberen Plattform (300), sodass die Seitendichtungsblöcke (200) die zweite Folie (422), die von den Seiten der Dichtungsleisten (110, 310) vorsteht, an den Seiten der Elektrodenbaugruppe (520) anhaften lassen, wobei die Dichtungsleisten (310) der oberen Plattform (300) und die Seitendichtungsblöcke (200) betrieben werden, um die zweite Folie (422) an der oberen Fläche und den Seiten der Elektrodenbaugruppe (520) zu befestigen.

9. Verfahren nach Anspruch 8, wobei das Paar Seitendichtungsblöcke (200), die auf gegenüberliegenden Seiten der unteren Plattform (100) angeordnet sind, so konfiguriert sind, dass sie in Bezug auf die untere Plattform (100) vorwärts und rückwärts bewegbar sind und in Richtung der unteren Plattform (100) bewegbar sind, um die erste und die zweite Folie (422) an den Seiten der Elektrodenbaugruppe (520) zu befestigen.

10. Verfahren nach Anspruch 9, wobei das Paar Seitendichtungsblöcke (200) konfiguriert sind, um während des Befestigens der ersten Folie (421) und der zweiten Folie (422) an den Seiten der Elektrodenbaugruppe (520) Unterdruck anzulegen, wodurch Falten in der ersten Folie (421) und der zweiten Folie (422) verhindert werden.

11. Verfahren nach Anspruch 8, wobei die Vielzahl von Dichtungsleisten (110) in der unteren Plattform (100) einstellbar beabstandet sind, um einer Breite der Elektrodenbaugruppe (520) zu entsprechen, und die Vielzahl von Dichtungsleisten (310) in der oberen Plattform (300) einstellbar beabstandet sind, um der Breite der Elektrodenbaugruppe (520) zu entsprechen.

12. Verfahren nach Anspruch 8, wobei die Elektrodenbaugruppe (520) und die erste Folie (421) und die zweite Folie (422) gestapelt und in einem Folienmagazin (410) bzw. einem Zellenmagazin (510) aufgenommen sind, einzeln ergriffen und durch einen Träger (700) auf die untere Plattform (100) bewegt werden.

13. Verfahren nach Anspruch 8, wobei die erste Folie (421) eine durch Erwärmung aktivierte Klebstoffschicht (430) umfasst und die zweite Folie (422) eine durch Erwärmung aktivierte Klebstoffschicht (430) umfasst, und Wärme auf die erste Folie (421) und die zweite Folie (422) nach dem Umhüllen der unteren Fläche, der oberen Fläche und der Seiten der Elektrodenbaugruppe (520) angewendet wird, sodass die erste Folie (421) und die zweite Folie (422) an der Elektrodenbaugruppe (520) anhaften.

14. Verfahren nach Anspruch 13, wobei die Klebstoffschicht (430) eine EthylenVinylacetat-Schicht (EVA-Schicht) ist, wobei die EVA-Schicht das Anhaften in einem Temperaturbereich von 120 °C bis 160 °C aktiviert.

15. Elektrodenbaugruppe (520), umfassend:
• eine Vielzahl von darin gestapelten Batteriezellen;
• eine erste Folie (421), die an einer unteren Fläche und gegenüberliegenden Seitenflächen der Vielzahl von Batteriezellen befestigt ist; und
• eine zweite Folie (422), die an einer oberen Fläche und den gegenüberliegenden Seitenflächen der Vielzahl von Batteriezellen befestigt ist, wobei
• die erste Folie (421) und die zweite Folie (422) eine Breite aufweisen, die die volle Breite der Elektrodenbaugruppe (520) überschreitet, entsprechend ungefähr 105 % bis 110 % der vollen Breite der Elektrodenbaugruppe (520).

16. Elektrodenbaugruppe (520) nach Anspruch 15, wobei auf den gegenüberliegenden Seitenflächen der Elektrodenbaugruppe (520) die zweite Folie (422) die erste Folie (421) überlappt und an dieser befestigt ist.

17. Elektrodenbaugruppe (520) nach Anspruch 15, wobei die erste Folie (421) und die zweite Folie (422) eine Polyethylenterephthalat-Folie (PET-Folie) sind.

18. Elektrodenbaugruppe (520) nach Anspruch 15, wobei eine Klebstoffschicht (430) zwischen der ersten Folie (421) und der zweiten Folie (422) und der Elektrodenbaugruppe (520) angeordnet ist.

19. Elektrodenbaugruppe (520) nach Anspruch 18, wobei die Klebstoffschicht (430) eine EVA-Schicht ist, und die EVA-Schicht konfiguriert ist, um bei Erwärmung anzuhaften.

20. Elektrodenbaugruppe (520) nach Anspruch 15, wobei die erste Folie (421) und die zweite Folie (422) die untere Fläche und die obere Fläche und die gegenüberliegenden Seitenflächen der Elektrodenbaugruppe (520) so umhüllen, dass sie nicht freiliegen.

21. Elektrodenbaugruppe (520) nach Anspruch 15, wobei die erste Folie (421) und die zweite Folie (422) eine Druckkraft über die untere Fläche und die obere Fläche und die gegenüberliegenden Seitenflächen der Elektrodenbaugruppe (520) ausüben.

## Revendications

1. Dispositif d'enveloppement d'ensemble d'électrodes (10), comprenant :
• une platine inférieure (100) ayant une pluralité de barres de scellage (110) sur une surface supérieure de la platine inférieure (100), dans lequel la platine inférieure (100) est configurée pour se déplacer de haut en bas ;
• une paire de blocs de scellage latéraux (200) disposés sur des côtés opposés de la platine inférieure (100), la paire de blocs de scellage latéraux (200) étant configurée pour se déplacer en direction de la platine inférieure (100) et s'éloigner de la platine inférieure (100) ; et
• une platine supérieure (300) ayant une pluralité de barres de scellage (310) sur une surface inférieure de la platine supérieure (300), dans lequel la platine supérieure (300) est disposée sur le dessus de la platine inférieure (100) et dans lequel la platine supérieure (300) est configurée pour se déplacer vers le haut et vers le bas par rapport à la platine inférieure (100).

2. Dispositif d'enveloppement d'ensemble d'électrodes (10) selon la revendication 1, dans lequel le bloc de scellage latéral (200) comprend un trou d'aspiration (220) sur une surface de scellage (210) du bloc de scellage latéral (200).

3. Dispositif d'enveloppement d'ensemble d'électrodes (10) selon la revendication 1, dans lequel la pluralité de barres de scellage (110) dans la platine inférieure (100) présentent un espacement réglable entre les barres de scellage (110) et dans lequel la pluralité de barres de scellage (310) dans la platine supérieure (300) présentent un espacement réglable entre les barres de scellage (310).

4. Dispositif d'enveloppement d'ensemble d'électrodes (10) selon la revendication 1, dans lequel une platine de film (400) et une platine de cellule (500) sont prévues sur un côté externe de la paire de blocs de scellage latéraux (200) par rapport à la platine inférieure (100).

5. Dispositif d'enveloppement d'ensemble d'électrodes (10) selon la revendication 4, dans lequel la platine de film (400) comprend un magasin de films (410) dans lequel une pluralité de films sont empilés et logés, et dans lequel la platine de cellule (500) comprend un magasin de cellules (510) dans lequel une pluralité d'ensembles d'électrodes sont empilés et logés.

6. Dispositif d'enveloppement d'ensemble d'électrodes (10) selon la revendication 5, dans lequel la platine supérieure (300) est montée sur une platine XY (600) disposée le long d'un plan XY parallèle à une surface de scellage (210) de la platine inférieure (100), dans lequel la platine supérieure (300) est configurée pour se déplacer en trois dimensions par rapport à la platine inférieure (100).

7. Dispositif d'enveloppement d'ensemble d'électrodes (10) selon la revendication 6, dans lequel la platine supérieure (300) comprend un support (700) configuré pour saisir un film (420) logé dans le magasin (410) de film (420) et un ensemble d'électrodes (520) logé dans le magasin de cellules (510), et dans lequel le support (700) est configuré pour se déplacer sur la platine inférieure (100).

8. Procédé d'enveloppement d'un ensemble d'électrodes (520), le procédé comprenant :
• le placement d'un premier film découpé (421) au-dessus d'une pluralité de barres de scellage (110) sur une surface supérieure d'une platine inférieure (100) ;
• l'alignement et le placement d'un ensemble d'électrodes (520) au-dessus du premier film (421) ;
• l'abaissement d'une platine supérieure (300) de sorte qu'une pluralité de barres de scellage (310) sur une surface de fond de la platine supérieure (300) entrent en contact avec l'ensemble d'électrodes (520) ;
• l'abaissement de la platine inférieure (100) et de la platine supérieure (300) tandis que la platine inférieure (100) et la platine supérieure (300) sont en contact étroit avec l'ensemble d'électrodes (520), de sorte qu'une paire de blocs de scellage latéraux (200) faisant saillie depuis des côtés des barres de scellage (110, 310) font adhérer le premier film (421) à des côtés de l'ensemble d'électrodes (520), dans lequel les barres de scellage (110) de la platine inférieure (100) et les blocs de scellage latéraux (200) sont actionnés pour fixer le premier film (421) à une surface de fond et aux côtés de l'ensemble d'électrodes (520) ;
• l'alignement et le placement d'un second film découpé (422) sur une surface supérieure de l'ensemble d'électrodes (520), la platine supérieure (300) étant décalée par rapport à la platine inférieure (100) ;
• l'abaissement de la platine supérieure (300) de sorte qu'une pluralité de barres de scellage (310) dans la platine supérieure (300) entrent en contact avec le second film (422) ; et
• l'abaissement de la platine inférieure (100) et de la platine supérieure (300) sous les blocs de scellage tandis que la platine inférieure (100) et la platine supérieure (300) sont en contact étroit avec l'ensemble d'électrodes (520), et l'élévation ultérieure de la platine inférieure (100) et de la platine supérieure (300) de telle sorte que les blocs de scellage latéraux (200) font adhérer le second film (422) faisant saillie depuis les côtés des barres de scellage (110 (310) aux côtés de l'ensemble d'électrodes (520), dans lequel les barres de scellage (310) de la platine supérieure (300) et les blocs de scellage latéraux (200) sont actionnés pour fixer le second film (422) à la surface supérieure et aux côtés de l'ensemble d'électrodes (520).

9. Procédé selon la revendication 8, dans lequel la paire de blocs de scellage latéraux (200) disposés sur des côtés opposés de la platine inférieure (100) sont configurés pour être mobiles vers l'avant et vers l'arrière par rapport à la platine inférieure (100) et pour être mobiles en direction de la platine inférieure (100) afin de fixer les premier et second films (422) aux côtés de l'ensemble d'électrodes (520).

10. Procédé selon la revendication 9, dans lequel la paire de blocs de scellage latéraux (200) sont configurés pour appliquer une pression négative pendant la fixation du premier film (421) et du second film (422) aux côtés de l'ensemble d'électrodes (520), empêchant ainsi des plis dans le premier film (421) et le second film (422).

11. Procédé selon la revendication 8, dans lequel la pluralité de barres de scellage (110) dans la platine inférieure (100) sont espacées de manière réglable pour correspondre à une largeur de l'ensemble d'électrodes (520) et la pluralité de barres de scellage (310) dans la platine supérieure (300) sont espacées de manière réglable pour correspondre à la largeur de l'ensemble d'électrodes (520).

12. Procédé selon la revendication 8, dans lequel l'ensemble d'électrodes (520) ainsi que le premier film (421) et le second film (422) sont empilés et logés dans un magasin de films (410) et dans un magasin de cellules (510), respectivement, saisis un par un et déplacés sur la platine inférieure (100) par un support (700).

13. Procédé selon la revendication 8, dans lequel le premier film (421) comprend une couche adhésive (430) activée par chauffage et le second film (422) comprend une couche adhésive (430) activée par chauffage, et
de la chaleur est appliquée au premier film (421) et au second film (422) après l'enveloppement de la surface de fond, de la surface supérieure et des côtés de l'ensemble d'électrodes (520), de telle sorte que le premier film (421) et le second film (422) adhèrent à l'ensemble d'électrodes (520).

14. Procédé selon la revendication 13, dans lequel la couche adhésive (430) est une couche d'éthylène-acétate de vinyle (EVA), dans lequel la couche d'EVA active l'adhésion dans une plage de températures allant de 120 °C à 160 °C.

15. Ensemble d'électrodes (520), comprenant :
• une pluralité de cellules de batterie qui y sont empilées ;
• un premier film (421) fixé à une surface de fond et à des surfaces latérales opposées de la pluralité de cellules de batterie ; et
• un second film (422) fixé à une surface supérieure et aux surfaces latérales opposées de la pluralité de cellules de batterie, dans lequel
• le premier film (421) et le second film (422) présentent une largeur qui dépasse la largeur totale de l'ensemble d'électrodes (520) correspondant à environ 105 % à 110 % de la largeur totale de l'ensemble d'électrodes (520).

16. Ensemble d'électrodes (520) selon la revendication 15, dans lequel sur les surfaces latérales opposées de l'ensemble d'électrodes (520), le second film (422) chevauche et est fixé sur le premier film (421).

17. Ensemble d'électrodes (520) selon la revendication 15, dans lequel le premier film (421) et le second film (422) sont un film de polyéthylène téréphtalate (PET).

18. Ensemble d'électrodes (520) selon la revendication 15, dans lequel une couche adhésive (430) est interposée entre le premier film (421) et le second film (422) et l'ensemble d'électrodes (520).

19. Ensemble d'électrodes (520) selon la revendication 18, dans lequel la couche adhésive (430) est une couche d'EVA, et la couche d'EVA est configurée pour adhérer lorsqu'elle est chauffée.

20. Ensemble d'électrodes (520) selon la revendication 15, dans lequel le premier film (421) et le second film (422) s'enveloppent autour de la surface de fond et de la surface supérieure, et des surfaces latérales opposées de l'ensemble d'électrodes (520), de telle sorte qu'elles ne soient pas exposées.

21. Ensemble d'électrodes (520) selon la revendication 15, dans lequel le premier film (421) et le second film (422) exercent une force de compression à travers la surface de fond et la surface supérieure, et les surfaces latérales opposées de l'ensemble d'électrodes (520).
